(19) Europäisches Patentamt
European Patent Office
Office européen des brevets

(11) **EP 4 745 774 A1**

(12) **EUROPEAN PATENT APPLICATION**
published in accordance with Art. 153(4) EPC

(43) Date of publication:
20.05.2026  Bulletin 2026/21

(21) Application number: 25814611.7

(22) Date of filing: 12.05.2025

(51) International Patent Classification (IPC):
*G06F 9/50* (2006.01)

(52) Cooperative Patent Classification (CPC):
G06F 9/48; G06F 9/50

(86) International application number:
PCT/CN2025/094412

(87) International publication number:
WO 2025/246892 (04.12.2025 Gazette 2025/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.05.2024  CN 202410700693

(71) Applicant: Huawei Technologies Co., Ltd.
Shenzhen, Guangdong 518129 (CN)

(72) Inventors:
• LIU, Chungang
  Shenzhen, Guangdong 518129 (CN)

• WANG, Xiayang
  Shenzhen, Guangdong 518129 (CN)
• NING, Dejian
  Shenzhen, Guangdong 518129 (CN)
• CAO, Yue
  Shenzhen, Guangdong 518129 (CN)
• ZHOU, Weilai
  Shenzhen, Guangdong 518129 (CN)

(74) Representative: Isarpatent
Patent- und Rechtsanwälte Part G mbB
Friedrichstrasse 31
80801 München (DE)

(54) **THREAD PRIORITY ADJUSTMENT METHOD AND RELATED DEVICE**

(57) Embodiments of this application disclose a thread priority adjustment method and a related device, applied to an electronic device. The electronic device runs a first application, where a first process of the first application includes a plurality of first threads; identifies an associated thread of the first thread from threads of a second process, where the second process is a process, other than the first process and a resident process, that is run by the electronic device and that provides a service for the first application; and detects that a running status of the first application changes, and adjusts a priority of the first thread and a priority of the associated thread, where a priority adjustment trend of the associated thread is consistent with a priority adjustment trend of the first thread. According to embodiments of this application, a response speed and performance of a system can be improved, thereby improving user experience.

FIG. 2

## Description

This application claims priority to Chinese Patent Application No. 202410700693.9, filed with the China National Intellectual Property Administration on May 30, 2024 and entitled "THREAD PRIORITY ADJUSTMENT METHOD AND RELATED DEVICE", which is incorporated herein by reference in its entirety.

## TECHNICAL FIELD

This application relates to the field of smart terminal technologies, and in particular, to a thread priority adjustment method and a related device.

## BACKGROUND

There are a large quantity of applications (Applications, APPs) in current terminal scenarios. When running a main process of an APP, a terminal device creates one or more subprocesses for the APP for collaboration with the main process, to provide a service for the APP. One process may include a plurality of threads, and the threads correspond to different user interaction relationships, namely, different user-expected response delays. For example, a UI thread of a user interaction task needs to be completed in time, a thread of a page loading task needs to be executed as quickly as possible, and a thread of a download or backup-related task may be deferred for later execution. Therefore, different threads have different priorities, and the thread priorities need to be appropriately allocated according to a user requirement. Setting threads of important tasks to higher priorities can ensure that the tasks are processed in time, thereby improving a response speed and performance of a system.

## SUMMARY

Embodiments of this application provide a thread priority adjustment method and a related device, to improve a response speed and performance of a system, thereby improving user experience.

According to a first aspect, an embodiment of this application provides a thread priority adjustment method, applied to an electronic device. The method includes: running a first application, where a first process of the first application includes a plurality of first threads; identifying an associated thread of the first thread from threads of a second process, where the second process is a process, other than the first process and a resident process, that is run by the electronic device and that provides a service for the first application; and detecting that a running status of the first application changes, and adjusting a priority of the first thread and a priority of the associated thread, where a priority adjustment trend of the associated thread is consistent with a priority adjustment trend of the first thread.

In this embodiment of this application, when running a main process (that is, the first process) of the first application, the electronic device further runs one or more subprocesses (that is, the second process) for collaboration with the main process, to provide a service for the first application. One process may include a plurality of threads, and the threads correspond to different user interaction relationships, namely, different user-expected response delays. Therefore, different threads have different priorities, and the thread priorities need to be appropriately adjusted according to a user requirement. Setting threads of important tasks to higher priorities can ensure that the tasks are processed in time. The application may adjust a priority of each first thread of the main process according to an application scenario requirement. However, for a plurality of subprocesses, because the plurality of subprocesses are processes started by a system, the application cannot sense threads of the subprocesses. Consequently, priorities of the threads of the subprocesses cannot be adjusted, and the priorities of the threads of the subprocesses cannot be appropriately adjusted according to a user requirement. In this application, the associated thread of the first thread is identified from threads of the one or more subprocesses, so that the associated thread follows the first thread in priority adjustment when it is detected that the running status of the first application changes, that is, when a user requirement changes. For a plurality of threads of a same subprocess, the threads may be associated with different first threads. Therefore, when it is detected that the running status of the first application changes, priority adjustment trends of the plurality of threads of the same subprocess are determined by the associated first threads, and may be different. This avoids a case in which a priority of a thread of a subprocess cannot be appropriately adjusted according to a user requirement because an application cannot sense the thread of the subprocess, thereby improving a response speed and performance of the system and improving user experience.

In some embodiments, when the second process is created by the first process, and the first thread is a main thread of the first process, identifying the associated thread of the first thread includes: identifying a main thread of the second process as the associated thread of the first thread.

In this embodiment of this application, when the second process (that is, the subprocess) is created by the first process (that is, the main process), a main thread of the subprocess inherits a main thread of the main process, and the main thread of the subprocess usually executes a task similar to that of the main thread of the main process. Therefore, the main thread of the main process and the main thread of the subprocess may be identified as associated threads, so that the associated thread can follow the first thread in priority adjustment, and thread scheduling is performed based on the priority. This can ensure that an important task can be processed in time, thereby improving a response speed and performance of the system and improving user experience.

In some embodiments, identifying the associated thread of the first thread includes: identifying a thread corresponding to a same task as the first thread from the threads of the second process as the associated thread of the first thread.

In this embodiment of this application, the thread corresponding to the same task as the first thread is identified from the threads (namely, second threads) of the one or more subprocesses as the associated thread of the first thread, so that the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

In some embodiments, the first thread communicates with a first module, and the method further includes: determining a thread that communicates with the first module in the threads of the second process as the thread corresponding to the same task as the first thread.

In this embodiment of this application, when the plurality of threads communicate with a same module (that is, the first module), the threads execute same code logic, and may execute a same task. Therefore, the threads may be associated, so that the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

In some embodiments, the first module is a rendering module run by the electronic device; or the first module is a window management module run by the electronic device; or the first module is a component management module run by the electronic device.

In this embodiment of this application, when the first thread accesses the rendering module, other threads interacting with the rendering module may be identified as the associated threads of the first thread, and execute a same or similar rendering task. When the first thread accesses the window management module, other threads interacting with the window management module may be identified as the associated threads of the first thread, and execute a same or similar window drawing task. When the first thread accesses the component management module, other threads interacting with the component management module may be identified as the associated threads of the first thread, and execute a same or similar graphics task. Further, the associated thread can follow the first thread in priority adjustment, and thread scheduling is performed based on the priority.

All threads corresponding to a same task can be scheduled to a processor at a same or similar moment for running, so that it can be ensured that the task is responded to more quickly, thereby improving a response speed and performance of the system and improving user experience.

In some embodiments, when the first module is the window management module, determining the thread that communicates with the first module in the threads of the second process as the thread corresponding to the same task as the first thread includes: determining, from the threads of the second process as the thread corresponding to the same task as the first thread, a thread that communicates with the window management module and that executes a drawing task for a same window as the first thread.

In this embodiment of this application, a plurality of threads communicating with the window management module may draw a same window, or may draw different windows. To more accurately identify the associated thread of the first thread, the thread that executes the drawing task for the same window as the first thread is determined as the thread corresponding to the same task as the first thread, that is, threads that draw the same window are associated. Further, the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

In some embodiments, before identifying the associated thread of the first thread, the method further includes: setting the priority of the first thread based on a first mapping table and a user interaction relationship value of the first thread, where the first mapping table includes a mapping relationship between a user interaction relationship value and a priority.

In this embodiment of this application, the first process may include the plurality of first threads, and the plurality of first threads may execute different tasks. In different application scenarios, the application may set the user interaction relationship value of the first thread according to the requirement, so that the electronic device can set the priority of the first thread based on the first mapping table and the user interaction relationship value of the first thread, so that the priority of the first thread is appropriately configured according to the user requirement. Setting the threads of the important tasks to the higher priorities can ensure that the tasks are processed in time, thereby improving user experience.

In some embodiments, after identifying the associated thread of the first thread, the method further includes: setting the priority of the associated thread based on the priority of the first thread.

In this embodiment of this application, the priority of the associated thread may be adjusted based on a priority of the thread of the main process. The priority of the thread of the main process is set according to the user requirement. Because the priority of the associated thread is determined by the priority of the thread of the main process, the priority of the associated thread can also meet the user requirement. This avoids a case in which a priority of a thread of a subprocess cannot be appropriately configured according to a user requirement because an application cannot sense the thread of the subprocess, thereby improving a response speed and performance of the system and improving user experience.

In some embodiments, the method further includes: detecting that the running status of the first application changes, and modifying the user interaction relationship value of the first thread.

In this embodiment of this application, when it is detected that the running status of the first application changes, that is, a user requirement changes, the first application may adjust the priority of the first thread by modifying the user interaction relationship value of the first thread, so that the priority of the thread of the first process is adjusted according to the user requirement, thereby improving user experience.

In some embodiments, detecting that the running status of the first application changes, and adjusting the priority of the first thread and the priority of the associated thread include: detecting that the running status of the first application changes, and adjusting the priority of the first thread and the priority of the associated thread based on a modified user interaction relationship value of the first thread and the first mapping table.

In this embodiment of this application, when it is detected that the running status of the first application changes, that is, a user requirement changes, the first application may adjust the priority of the first thread based on the modified user interaction relationship value of the first thread. Further, the associated thread can follow the first thread in priority adjustment. This avoids the case in which the thread priority of the subprocess cannot be appropriately adjusted according to a user requirement because an application cannot sense the thread of the subprocess, thereby improving a response speed and performance of the system and improving user experience.

In some embodiments, a larger user interaction relationship value in the first mapping table indicates a higher priority of a corresponding thread; and when the change in the running status of the first application is that the first application switches from a foreground state to a background state or a frozen state, the user interaction relationship value of the first thread decreases, and the priority of the first thread and the priority of the associated thread decrease; or when the change in the running status of the first application is that the first application switches from the background state or the frozen state to the foreground state, the user interaction relationship value of the first thread increases, and the priority of the first thread and the priority of the associated thread increase.

In this embodiment of this application, when the first application switches from the foreground state to the background state or the frozen state, the priority of the first thread and the priority of the associated thread may be decreased, to ensure that a current foreground application of the electronic device can respond more quickly; or when the first application switches from the background state or the frozen state to the foreground state, the priority of the first thread and the priority of the associated thread may be increased, to ensure that the first application can respond more quickly, thereby improving user experience.

In some embodiments, the electronic device includes a processor, and the method further includes: determining aggregated load of the first thread and the associated thread, where the aggregated load is a product of a current frequency of the processor and a first duty cycle, and the first duty cycle is a proportion of total duration of the first thread and the associated thread in a frequency adjustment period of the processor; and adjusting a main frequency of the processor based on the aggregated load.

In this embodiment of this application, after the thread is scheduled to the processor for running, the aggregated load may be calculated based on total running duration of the thread and the associated thread, so as to adjust the main frequency of the processor based on the calculated aggregated load. This can ensure a thread running speed and can further reduce energy consumption, thereby improving user experience.

In some embodiments, adjusting the main frequency of the processor based on the aggregated load includes: determining whether the aggregated load is greater than a first threshold; and increasing the main frequency of the processor when the aggregated load is greater than the first threshold and greater than a second threshold; or decreasing or skipping adjusting the main frequency of the processor when the aggregated load is greater than the first threshold and less than or equal to the second threshold.

In this embodiment of this application, the first threshold may be a value preset by a user, or may be an empirical value. The first threshold may indicate a frequency corresponding to energy consumption acceptable to the system. When the aggregated load is greater than the first threshold, it indicates that the first thread and the associated thread of the first thread correspond to a heavy-load task, and the heavy-load task is generally an important task. In this case, the system tends to ensure performance of the first thread and the associated thread, so as to adjust the main frequency of the processor based on the aggregated load. Further, when the aggregated load is greater than the second threshold, it indicates that the processor currently runs the first thread and the associated thread most of the time. In this case, the main frequency of the processor may be increased, so that the processor can run the first thread and the associated thread more quickly. Alternatively, when the aggregated load is less than or equal to the second threshold, it indicates that the processor currently still has significant idle time after the processor runs the first thread and the associated thread. In this case, the main frequency of the processor is decreased or is not adjusted, so that energy consumption of the processor is reduced.

In some embodiments, the method further includes: determining first load of the first thread if the aggregated load is less than or equal to the first threshold, where the first load is a product of the current frequency of the processor and a second duty cycle, and the second duty cycle is a proportion of duration of the first thread in the frequency adjustment period of the processor; and adjusting the main frequency of the processor based on the first load.

In this embodiment of this application, when the aggregated load is less than or equal to the first threshold, it indicates that the first thread and the associated thread of the first thread correspond to a light-load task, and the light-load task is generally a common task. In this case, the system tends to reduce energy consumption of the processor, so that the first load can be calculated based on running duration of the first thread, and the main frequency of the processor can be adjusted based on the calculated first load, thereby reducing energy consumption of the processor and improving user experience.

According to a second aspect, a frequency adjustment method is provided, and is applied to an electronic device, where the electronic device includes a processor. The method includes: running a first application, where a first process of the first application includes a plurality of first threads; identifying an associated thread of the first thread from threads of a second process, where the second process is a process, other than the first process and a resident process, that is run by the electronic device and that provides a service for the first application; determining aggregated load of the first thread and the associated thread, where the aggregated load is a product of a current frequency of the processor and a first duty cycle, and the first duty cycle is a proportion of total duration of the first thread and the associated thread in a frequency adjustment period of the processor; and adjusting a main frequency of the processor based on the aggregated load.

In this embodiment of this application, after the thread is scheduled to the processor for running, the aggregated load may be calculated based on total running duration of the thread and the associated thread, so as to adjust the main frequency of the processor based on the calculated aggregated load, that is, adjust frequency by comprehensively considering running statuses of the first thread and the associated thread. This can ensure a thread running speed and can further reduce energy consumption, thereby improving user experience.

In some embodiments, adjusting the main frequency of the processor based on the aggregated load includes: determining whether the aggregated load is greater than a first threshold; and adjusting the main frequency of the processor based on the aggregated load if the aggregated load is greater than the first threshold.

In some embodiments, adjusting the main frequency of the processor based on the aggregated load includes: increasing the main frequency of the processor when the aggregated load is greater than a second threshold; or decreasing or skipping adjusting the main frequency of the processor when the aggregated load is less than or equal to the second threshold.

In some embodiments, the method further includes: determining first load of the first thread if the aggregated load is less than or equal to the first threshold, where the first load is a product of the current frequency of the processor and a second duty cycle, and the second duty cycle is a proportion of duration of the first thread in the frequency adjustment period of the processor; and adjusting the main frequency of the processor based on the first load.

According to a third aspect, a thread priority adjustment method is provided, and is applied to an electronic device. The method includes: running a first application, where an interface of the first application includes a first window corresponding to a first process and a second window corresponding to a second process, the second window is nested in the first window, the first process is a process of the first application, the second process is a process of the first application or a second application, and a UI thread of the second process is an associated thread of a UI thread of the first process; and detecting that a running status of the first application changes, and adjusting a priority of the UI thread of the first process and a priority of the associated thread, where a priority adjustment trend of the associated thread is consistent with a priority adjustment trend of the UI thread of the first process.

In this embodiment of this application, the interface of the first application may include a plurality of windows, such as the first window and the second window. The second window is nested in the first window. The first window needs to be simultaneously rendered with the second window. Therefore, a UI thread corresponding to the first window may be associated with a UI thread corresponding to the second window, that is, the UI thread of the second process is used as the associated thread of the UI thread of the first process. Therefore, when it is detected that the running status of the first application changes, that is, when a user requirement changes, the UI thread of the second process follows the UI thread of the first process in priority adjustment. This avoids a case in which a priority of a thread of the second process cannot be appropriately adjusted according to a user requirement because an application cannot sense the thread of the second process, thereby improving a response speed and performance of a system and improving user experience.

In some embodiments, a component tree of the second process is mounted in a component tree of the first process. For example, the component tree of the first process has a node identifier, and the node identifier is used for mounting the component tree of the second process. In this way, the electronic device may nest an interface of the second process in an interface of the first process.

In some implementations, the second process and the first process may belong to different applications.

In some implementations, the second process may be a process of an installation-free application.

In some implementations, for the thread priority adjustment method provided in the third aspect, the method in some embodiments provided in the first aspect may also be performed, for example, in an embodiment related to the priority or a user interaction relationship value or an embodiment related to aggregated load.

According to a fourth aspect, a thread priority adjustment method is provided, and is applied to an electronic device. The method includes: running a first application, where a first process of the first application includes a plurality of first threads; identifying an associated thread of the first thread from threads of a second process, where the first thread and the associated thread are used for jointly rendering an interface of the first application; and detecting that a running status of the first application changes, and adjusting a priority of the first thread and a priority of the associated thread, where a priority adjustment trend of the associated thread is consistent with a priority adjustment trend of the first thread.

In this embodiment of this application, because threads for rendering the interface of the first application execute a similar task, threads that are of different processes and that render the interface of the first application may be associated. To be specific, a thread that jointly renders the interface of the first application with the first thread is identified from the threads of the second process as the associated thread. Therefore, when it is detected that the running status of the first application changes, that is, when a user requirement changes, the associated thread follows the first thread in priority adjustment. This avoids a case in which a priority of a thread of a subprocess cannot be appropriately adjusted according to a user requirement because an application cannot sense the thread of the subprocess, thereby improving a response speed and performance of a system and improving user experience.

In some embodiments, both the first thread and the associated thread are used for sending a rendering instruction to a rendering module.

In some implementations, the second process may be a rendering process based on a web kernel.

In some implementations, the second process and the first process may belong to a same application.

In some implementations, the application may use a framework, for example, flutter, vue, or react.

In some implementations, for the thread priority adjustment method provided in the fourth aspect, the method in some embodiments provided in the first aspect may also be performed, for example, in an embodiment related to the priority or a user interaction relationship value or an embodiment related to aggregated load.

According to a fifth aspect, an electronic device is provided, and includes a storage and one or more processors. The storage is coupled to the one or more processors, the storage is configured to store computer program code, the computer program code includes computer instructions, and the one or more processors invoke the computer instructions, to enable the electronic device to perform the method according to any one of the first aspect or the implementations of the first aspect, perform the method according to any one of the second aspect or the implementations of the second aspect, perform the method according to any one of the third aspect or the implementations of the third aspect, or perform the method according to any one of the fourth aspect or the implementations of the fourth aspect.

According to a sixth aspect, a computer-readable storage medium is provided, and includes instructions. When the instructions are run on an electronic device, the electronic device is enabled to perform the method according to any one of the first aspect or the implementations of the first aspect, perform the method according to any one of the second aspect or the implementations of the second aspect, perform the method according to any one of the third aspect or the implementations of the third aspect, or perform the method according to any one of the fourth aspect or the implementations of the fourth aspect.

According to a seventh aspect, a computer program product is provided. When the computer program product runs on a computer, the computer is enabled to perform the method according to any one of the first aspect or the implementations of the first aspect, perform the method according to any one of the second aspect or the implementations of the second aspect, perform the method according to any one of the third aspect or the implementations of the third aspect, or perform the method according to any one of the fourth aspect or the implementations of the fourth aspect.

According to an eighth aspect, a chip system is provided. The chip system includes at least one processor, to implement the method according to any one of the first aspect or the implementations of the first aspect, implement the method according to any one of the second aspect or the implementations of the second aspect, perform the method according to any one of the third aspect or the implementations of the third aspect, or perform the method according to any one of the fourth aspect or the implementations of the fourth aspect.

## BRIEF DESCRIPTION OF DRAWINGS

FIG. 1a is a diagram of a structure of an electronic device according to an embodiment of this application;

FIG. 1b is a block diagram of a software structure of an electronic device 100 according to an embodiment of this application;

FIG. 2 is a schematic flowchart of a thread priority adjustment method according to an embodiment of this application;

FIG. 3 is a diagram of a first thread and a user interaction relationship QoS value according to an embodiment of this application;

FIG. 4 is a diagram of a first mapping table according to an embodiment of this application;

FIG. 5 is a diagram of a main process and a subprocess of a first application according to an embodiment of this application;

FIG. 6 is a diagram of identifying an associated thread according to an embodiment of this application;

FIG. 7 is another diagram of identifying an associated thread according to an embodiment of this application;

FIG. 8 is still another diagram of identifying an associated thread according to an embodiment of this application;

FIG. 9 is a diagram of adjusting a thread priority of a subprocess according to an embodiment of this application;

FIG. 10 is a diagram of adjusting priorities of a first thread and an associated thread according to an embodiment of this application;

FIG. 11 is a diagram of a first threshold according to this application;

FIG. 12 is a diagram of a thread priority scheduling method according to an embodiment of this application;

FIG. 13 is a schematic flowchart of a frequency adjustment method according to an embodiment of this application;

FIG. 14 is a schematic flowchart of a thread priority adjustment method according to an embodiment of this application; and

FIG. 15 is a diagram of an interface of a first application according to an embodiment of this application.

## DESCRIPTION OF EMBODIMENTS

The following describes embodiments of this application with reference to the accompanying drawings in embodiments of this application.

In the specification, the claims, and the accompanying drawings of this application, terms such as "first", "second", "third", and "fourth" are used for distinguishing between different objects, but are not used for describing a specific order. In addition, terms "including", "having", and any variations thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

In this specification, reference to "embodiment" means that specific features, structures, or characteristics described with reference to the embodiments may be included in at least one embodiment of this application. The phrase shown in various locations in the specification may not necessarily refer to a same embodiment, and is not an independent or alternative embodiment exclusive from another embodiment. It is explicitly and implicitly understood by a person skilled in the art that embodiments described in the specification may be combined with another embodiment.

Embodiments of this application provide a thread priority adjustment method. The method may be applied to an electronic device. Currently, some examples of the electronic device are: a smartphone (mobile phone), a tablet computer, a notebook computer, a palmtop computer, a mobile internet device (mobile internet device, MID), a wearable device (for example, a smart watch), a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

Before the method provided in embodiments of this application is described in detail, the electronic device provided in embodiments of this application is first described.

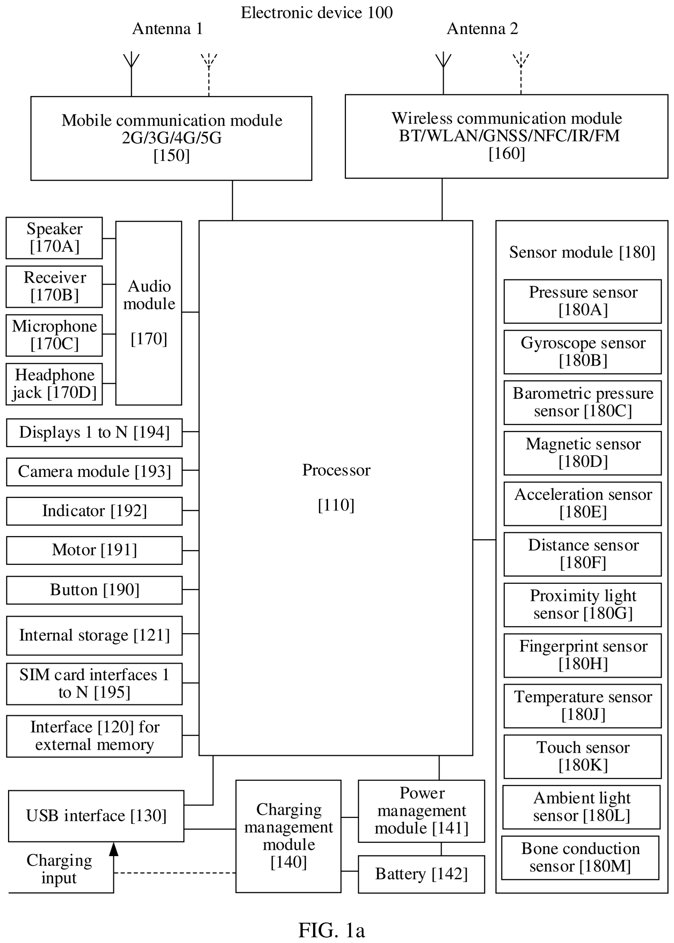

FIG. 1a is a diagram of a structure of an electronic device 100.

The electronic device 100 may include a processor 110, an interface 120 for external memory, an internal storage 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headphone jack 170D, a sensor module 180, a button 190, a motor 191, an indicator 192, a camera module 193, a display 194, a subscriber identity module (subscriber identity module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or there may be different component arrangements. The components shown in the figure may be implemented by hardware, software, or a combination of software and hardware.

The processor 110 may include one or more processing units. For example, the processor 110 may include an application processor (application processor, AP), a central processing unit (central processing unit, CPU), a graphics processing unit (graphics processing unit, GPU), a neural-network processing unit (neural-network processing unit, NPU), a modem processor, an image signal processor (image signal processor, ISP), a controller, a storage, a video codec, a digital signal processor (digital signal processor, DSP), and a baseband processor. Different processing units may be independent devices, or may be integrated into one or more processors.

The processor 110 may load, to the internal storage 121, instructions or data stored in an external storage (for example, a magnetic disk), and invoke, to the processor 110 for operation, instructions or data that needs to be operated. After the operation is completed, the processor 110 then temporarily stores a result in the internal storage 121, and stores, in the external storage by using a controller, instructions or data that needs to be stored for a long time. Different types of software, such as an operating system, a file system (for example, a flash file system F2FS), or an application program, may run on the processor 110 to control a plurality of hardware or software elements connected to the processor 110. In addition, various data can be processed and operations can be performed.

A storage may be further disposed in the processor 110, and is configured to store instructions and data. In some embodiments, the storage in the processor 110 is a cache memory. The storage may store instructions or data just used or cyclically used by the processor 110. If the processor 110 needs to use the instructions or the data again, the processor may directly invoke the instructions or the data from the storage. This avoids repeated access, and reduces waiting time of the processor 110, thereby improving efficiency of the electronic device 100.

The display 194 is configured to display user interfaces, images, videos, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a microLED, a micro-OLED, a quantum dot light-emitting diode (quantum dot light-emitting diode, QLED), and the like.

The interface 120 for external memory may be configured to connect to an external storage, that is, an external memory card, for example, a micro SD card, to extend a storage capability of the electronic device 100. The external memory card communicates with the processor 110 through the interface 120 for external memory, to implement a data storage function.

The internal storage 121 may be configured to store one or more computer programs. The one or more computer programs include instructions. The processor 110 may run the instructions stored in the internal storage 121, so that the electronic device 100 is enabled to perform a thread priority adjustment method provided in some embodiments of this application, various functional applications and data processing, and the like. The internal storage 121 may include a program storage area and a data storage area. The program storage area may store an operating system, and may further store one or more application programs (for example, Huawei videos or contacts) and the like. The data storage area may store data (for example, user interaction relationship information configured by a user) created during use of the electronic device 100. In addition, the internal storage 121 may include a high-speed random access memory, or may include a non-volatile memory, for example, at least one magnetic disk storage device, a flash memory device, or a universal flash storage (universal flash storage, UFS).

It may be understood that the structure of the electronic device in FIG. 1a is merely some example implementations provided in embodiments of the present invention. The electronic device in embodiments of the present invention includes but is not limited to the foregoing implementations.

A software system of the electronic device 100 may use a layered architecture, an event-driven architecture, a microkernel architecture, a micro service architecture, or a cloud architecture. In embodiments of this application, a mobile operating system with a layered architecture is used as an example to describe a software structure of the electronic device 100. The software system in this application may also be a system like a HarmonyOS system, an Android system, or an iOS system.

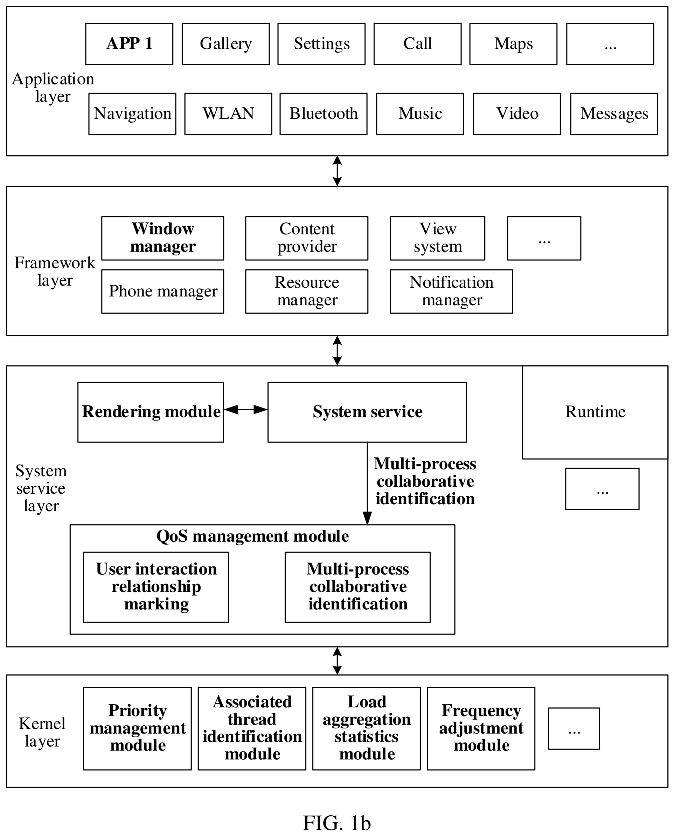

FIG. 1b is a block diagram of the software structure of the electronic device 100 according to an embodiment of this application.

In the layered architecture, software is divided into several layers, and each layer has a clear role and task. The layers communicate with each other through a software interface. In some embodiments, the mobile operating system is divided into four layers: an application layer, a framework layer, a system service layer, and a kernel layer from top to bottom.

The application layer may include a series of application programs.

As shown in FIG. 1b, an application package may include an application 1 (the APP 1 may be a third-party application, or may be a system application), Gallery, Calendar, Call, Navigation, WLAN, Bluetooth, Music, Video, Messages, and the like.

When the electronic device 100 runs a main process of the APP 1, one or more subprocesses run by the electronic device 100 collaborate with the main process, to provide a service for the APP 1. One process may include a plurality of threads, and the threads correspond to different user interaction relationships, namely, different user-expected response delays. For example, a UI thread of a user interaction task needs to be completed in time, a thread of a page loading task needs to be executed as quickly as possible, and a thread of a download or backup-related task may be executed later. Therefore, different threads have different priorities, and the thread priorities need to be appropriately allocated according to a user requirement. Setting threads of important tasks to higher priorities can ensure that the tasks are processed in time, thereby improving a response speed and performance of the system.

In some embodiments, the application (or a user) may configure a corresponding user interaction relationship for each thread of the main process of the APP 1 according to an application scenario requirement, so that a priority of the thread of the main process can be determined based on the user interaction relationship.

An application framework layer provides an application programming interface (application programming interface, API) and a programming framework for an application program at the application layer. The application framework layer includes some predefined functions.

As shown in FIG. 1b, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

It should be noted that a parent-child relationship exists between the window program and the application program (APP). In other words, the application program may include one or more window programs. The window program may be a basic unit of the application program, and is configured to display information and receive user input. The window program is managed by the window manager, while the application program is a container of the window program and may include a plurality of window programs to implement different functions and interaction interfaces.

In some embodiments, the window manager may be configured to manage a window drawing task. The window drawing task may be a task of drawing a window 1, a task of drawing a window 2, a task of drawing a window 3, or the like. The window manager may record thread invocation information corresponding to each window. For example, thread invocation information corresponding to the drawing of the window 1 includes related information of all threads that need to be invoked for the drawing of the window 1, thread invocation information corresponding to the drawing of the window 2 includes related information of all threads that need to be invoked for the drawing of the window 2, and thread invocation information corresponding to the drawing of the window 3 includes related information of all threads that need to be invoked for the drawing of the window 3.

The content provider is configured to store and obtain data, and make the data accessible to an application program. The data may include biometric data, images, videos, audios, calls made and answered, a browsing history and bookmarks, a phone book, and the like of the user.

The view system includes visual controls such as a text display control and a picture display control. The view system may be configured to build an application program. A display interface may include one or more views, for example, a display interface including a short message service notification icon, which may include a text display view and a picture display view.

The phone manager is configured to provide a communication function for the electronic device 100, for example, management of a call state (including answering, hanging up, or the like).

The resource manager provides various resources such as a localized picture, a string, an icon, a layout file, and a video file for an application program.

The notification manager makes an application program display notification information in a status bar, and may be configured to convey a notification-type message. The notification manager may automatically disappear after a short pause without user interaction. For example, the notification manager is configured to notify download completion, provide message reminders, and the like. The notification manager may alternatively be a notification that appears in a top status bar of the system in a form of a graph or a scroll bar text, for example, a notification of an application program that runs in a background, or may be a notification that appears on the screen in a form of a dialog window. For example, text information is displayed in the status bar, a notification sound is given, the electronic device vibrates, or an indicator light blinks.

The system service layer may include a plurality of functional modules, such as a rendering module, a system service, a quality of service (Quality of Service, QoS) management module, and a surface manager (surface manager), a media library (Media Library), a 3D engine module (for example, OpenGL ES), and a 2D graphics engine (for example, SGL or vulkan) that are not shown in FIG. 1b.

The rendering module may be configured to determine how to convert, color, and draw an image or a grid of a particle, and overlay the image or grid with another particle.

In some embodiments, the rendering module may record thread access information in a preset time period, where the thread access information includes information about a thread that has accessed the rendering module in the preset time period, for example, a thread identifier.

The system service is a software module configured to manage and perform a system-level function, for example, a surface manager, a media library, a 3D engine module, and a 2D graphics engine. These system services are usually used for processing specific types of data or perform specific types of operations to support functionality and performance of an application program.

In some embodiments, when the electronic device 100 runs the main process of the APP 1, the system service may start the one or more subprocesses for collaboration with the main process, to provide a service for the APP 1.

In some embodiments, the system service may identify, based on system information, the one or more subprocesses that collaborate with the main process of the APP 1.

Optionally, the subprocess in embodiments of this application may not include a resident process started by the system service, for example, the OpenGL ES.

The QoS management module may be configured to manage pieces of user interaction relationship information respectively corresponding to a plurality of threads of a main process of an application program. In this application, the QoS management module may further interact with the system service, and obtain, from the system service, information about the one or more subprocesses that collaborate with the main process of the APP 1.

In some embodiments, the QoS management module may interact with a priority management module at the kernel layer, and send user interaction relationships corresponding to threads of the main process to the priority management module, so that the priority management module can determine priorities of the threads based on the user interaction relationships.

The surface manager is configured to manage a display subsystem, and provide fusion of 2D and 3D layers for a plurality of application programs.

The media library supports playback and recording in a plurality of commonly used audio and video formats, static image files, and the like. The media library may support a plurality of audio and video encoding formats, such as MPEG-4, G.264, MP3, AAC, and AMR.

The 3D engine module is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a priority management module, an associated thread identification module, a load aggregation statistics module, and a frequency adjustment module.

The associated thread identification module is a module newly added in a thread priority adjustment method in this application, and is configured to identify an associated thread of the thread of the main process from threads of the one or more subprocesses, thereby facilitating subsequent adjustment of a priority of the associated thread based on the thread of the main process. This avoids a problem that a priority of a thread of a subprocess cannot be appropriately allocated according to a user requirement and a response speed and performance of the system are affected because the main process of the application cannot sense the thread of the subprocess and cannot allocate user interaction relationships to a plurality of threads of the subprocess, thereby improving a response speed and performance of the system and improving user experience. How to identify the associated thread of the thread of the main process is described in detail subsequently. Details are not described herein.

The priority management module may store a mapping relationship between the user interaction relationship and the priority, and may determine the priority corresponding to the thread based on the user interaction relationship corresponding to the thread. The thread priority adjustment method provided in this application is described in detail subsequently. Details are not described herein.

The load aggregation statistics module is a newly added module in this application, and may be configured to calculate aggregated load of the thread. How to calculate the aggregated load is described in detail subsequently. Details are not described herein.

The frequency adjustment module may be configured to adjust a main frequency of a processor of the electronic device 100. How to adjust the main frequency of the processor is described in detail subsequently. Details are not described herein.

It may be understood that the software architecture in FIG. 1b is merely some example implementations provided in embodiments of the present invention. The software architecture in embodiments of the present invention includes but is not limited to the foregoing implementations.

The foregoing describes the architecture in embodiments of this application. The following describes in detail the method in embodiments of this application.

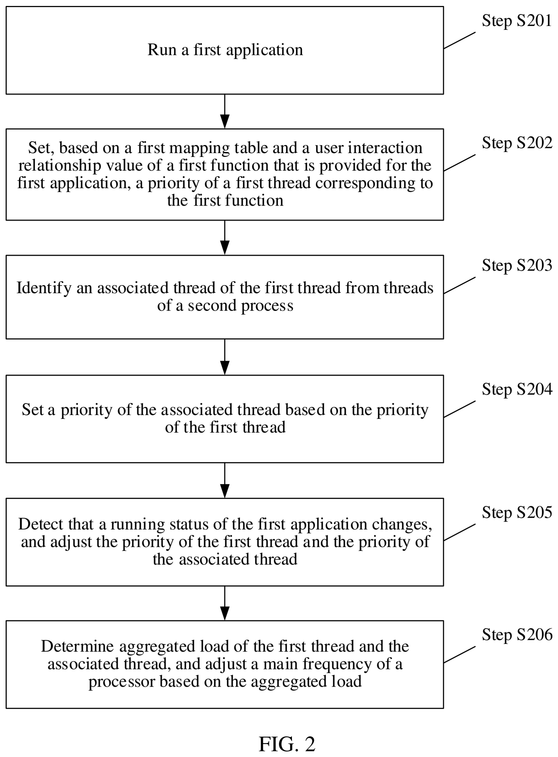

FIG. 2 is a schematic flowchart of a thread priority adjustment method according to an embodiment of this application. Optionally, the method may be applied to the foregoing electronic device 100. The thread priority adjustment method shown in FIG. 2 may include step S201 to step S206. It should be understood that, for ease of description in this application, an order of step S201 to step S206 is used for description, but this is not intended to limit execution necessarily to the foregoing order. An execution order, execution time, a quantity of execution times, and the like of the foregoing one or more steps are not limited in embodiments of this application. The following uses an example in which step S201 to step S206 of the thread priority adjustment method are performed by a smartphone for description. This application is also applicable to another entities for performing the method such as a server or another electronic device. Step S201 to step S206 are specifically as follows.

Step S201: Run a first application.

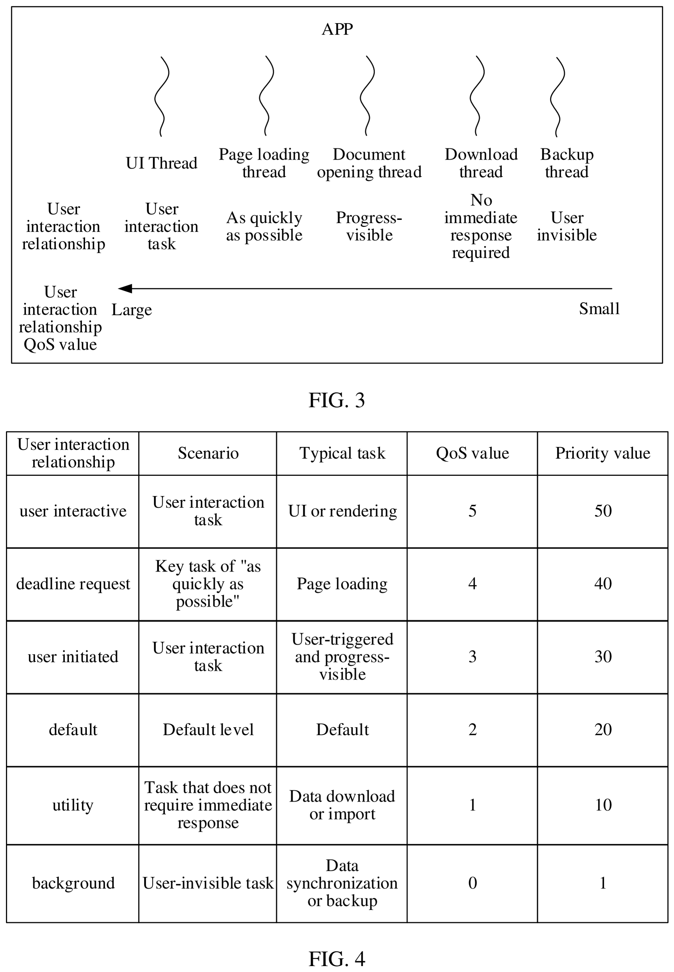

Specifically, a first process of the first application includes a plurality of first threads. The first application may be a factory-installed application of the mobile phone or an application downloaded by a user. For example, the first application is Huawei MeeTime. The first process is a main process of the first application. The plurality of first threads are execution units of the first process, and the plurality of first threads may execute different tasks, or may execute a same task. For example, FIG. 3 is a diagram of a first thread and a user interaction relationship QoS value according to an embodiment of this application. The plurality of first threads may include a UI thread, a page loading thread, a document opening thread, a download thread, a backup thread, and the like.

Optionally, step S202: Set, based on a first mapping table and a user interaction relationship value of a first function that is provided for the first application, a priority of a first thread corresponding to the first function.

Specifically, the first application may provide a plurality of functions, such as a rendering function, a page loading function, a document opening function, a download function, and a backup function. The first function may be one of the plurality of functions. The first thread corresponding to the first function may be one or more of the plurality of first threads. The user interaction relationship value may indicate a user-expected response delay. Different first threads may correspond to different user interaction relationship values.

It should be noted that the user interaction relationship value in this application may be represented by a quality of service (Quality of Service, QoS) value.

In some embodiments, a lower user-expected response delay indicates a larger QoS value.

For example, as shown in FIG. 3, the plurality of first threads may include the UI thread, the page loading thread, the document opening thread, the download thread, and the backup thread. A user interaction relationship of the UI thread is a user interaction task, a user-expected response delay is low, and therefore a QoS value corresponding to the UI thread is the largest. A user interaction relationship of the page loading thread is "as quickly as possible", a user-expected response delay is low, and therefore a QoS value of the page loading thread is smaller than the QoS value corresponding to the UI thread. A user interaction relationship of the document opening thread is "progress-visible", and therefore a QoS value of the document opening thread is smaller than the QoS value of the page loading thread. A user interaction relationship of the download thread is "no immediate response required", and therefore a QoS value of the download thread is smaller than the QoS value of the document opening thread. A user interaction relationship of the backup thread is "user-invisible", and therefore a QoS value of the backup thread is smaller than the QoS value of the download thread.

In some other embodiments, a lower user-expected response delay may alternatively indicate a smaller QoS value.

The first mapping table includes a mapping relationship between a QoS value and a priority.

Optionally, a larger QoS value indicates a lower user-expected response delay and a higher priority. For example, FIG. 4 is a diagram of the first mapping table according to an embodiment of this application. Only six QoS values: 0, 1, 2, 3, 4, and 5, are shown in this example. The QoS value 0 corresponds to a priority value 1, the QoS value 1 corresponds to a priority value 10, the QoS value 2 corresponds to a priority value 20, the QoS value 3 corresponds to a priority value 30, the QoS value 4 corresponds to a priority value 40, and the QoS value 5 corresponds to a priority value 50. It should be noted that a larger priority value indicates a higher priority in this example.

In this embodiment of this application, the first process may include the plurality of first threads, and the plurality of first threads may execute different tasks. In different application scenarios, the application may set, according to a requirement, the user interaction relationship QoS value of the first function that is provided by the first application, so that the electronic device can set, based on the first mapping table and the user interaction relationship QoS value of the first function, the priority of the first thread corresponding to the first function, so that the priority of the first thread is appropriately configured according to a user requirement. Setting threads of important tasks to higher priorities can ensure that the tasks are processed in time, thereby improving user experience.

In some embodiments, a priority of each first thread is set based on the first mapping table and a user interaction relationship value corresponding to each of the plurality of first threads.

Step S203: Identify an associated thread of the first thread from threads of a second process.

Specifically, the second process is a process, other than the first process, that is run by the electronic device and that provides a service for the first application.

Optionally, a subprocess in embodiments of this application may not include a resident process started by a system service, for example, OpenGL ES. The resident process may be understood as a process that continuously runs and resides in a memory, and is usually started when a system is started and continues to run until the system is shut down. In some embodiments, the electronic device automatically starts the resident process upon startup, and an operating system (Operating System, OS) does not actively scan and kill the resident process. Even if the resident process is scanned and killed, the operating system starts the resident process again.

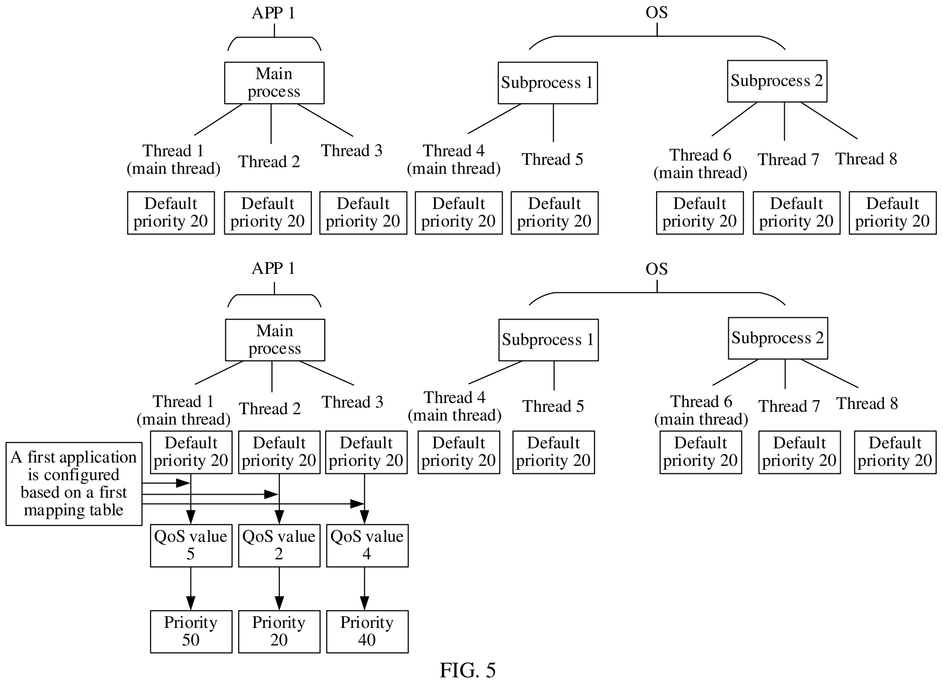

For example, FIG. 5 is a diagram of the main process and a subprocess of the first application according to an embodiment of this application. When running the first process (that is, the main process) of the first application, the electronic device creates one or more subprocesses for the first application for collaboration with the main process, to provide a service for the first application.

Optionally, a plurality of first threads of the main process and threads of the one or more subprocesses may be provided with default priorities in an initial state, and default priorities of different threads may be the same or different.

For example, in FIG. 5, the default priorities corresponding to the plurality of first threads of the main process and the threads of the one or more subprocesses all are 20. The application may configure QoS values for the plurality of first threads of the main process according to a user requirement and the first mapping table. It is assumed that the main process includes three threads: a thread 1, a thread 2, and a thread 3, a QoS value corresponding to the thread 1 is 5, a QoS value corresponding to the thread 2 is 2, and a QoS value corresponding to the thread 3 is 4. For example, the electronic device may update, based on the first mapping table and the QoS values, a priority corresponding to a thread of the main process. For example, a priority corresponding to the thread 1 is 50, a priority corresponding to the thread 2 is 20, and a priority corresponding to the thread 3 is 40. However, for subprocesses, such as a subprocess 1 and a subprocess 2, because these processes are started by the system service, the application cannot sense threads of the subprocesses. Consequently, priorities of the threads of the subprocesses cannot be adjusted, and the priorities of the threads of the subprocesses cannot be appropriately adjusted according to a user requirement. Therefore, in some examples of this application, the associated thread of the first thread is identified from the threads of the one or more subprocesses, so that the associated thread can follow the first thread in priority adjustment. For a plurality of threads of a same subprocess, the threads may be associated with different first threads. Therefore, priority adjustment trends of the plurality of threads of the same subprocess are determined by the associated first threads, and may be different. This avoids a case in which a priority of a thread of a subprocess cannot be appropriately adjusted according to a user requirement because an application cannot sense the thread of the subprocess, thereby improving a response speed and performance of the system and improving user experience.

In some embodiments, when the second process is created by the first process, and the first thread is a main thread of the first process, identifying the associated thread of the first thread includes: identifying a main thread of the second process as the associated thread of the first thread.

Specifically, the main process may invoke a system function, for example, a fork() function, to create a new subprocess. When the second process (that is, the subprocess) is created by the first process (that is, the main process), a main thread of the subprocess inherits a main thread of the main process, and the main thread of the subprocess usually executes a task similar to that of the main process. Therefore, the main thread of the subprocess may be identified as an associated thread of the main thread of the main process, so that the associated thread can follow the first thread in priority adjustment, and thread scheduling is performed based on the priority. This can ensure that an important task is processed in time, thereby improving a response speed and performance of the system and improving user experience.

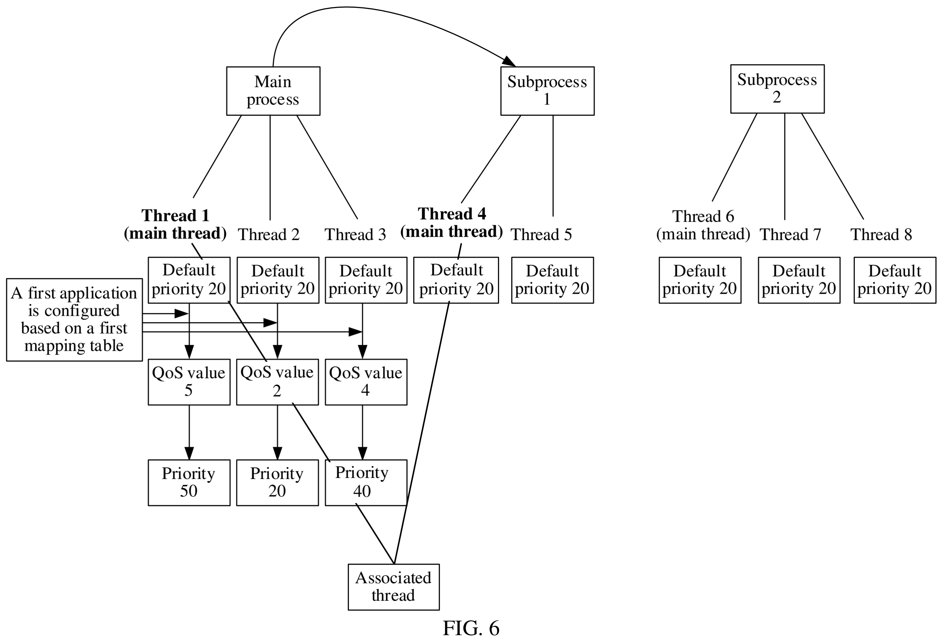

For example, FIG. 6 is a diagram of identifying an associated thread according to an embodiment of this application. Assuming that a main process creates a subprocess 1, a main thread (that is, a thread 4) of the subprocess 1 may be identified as an associated thread of a main thread (that is, a thread 1) of the main process, so that the thread 4 can follow the thread 1 in priority adjustment, to enable a priority of the thread 4 to be adjusted to 50, and thread scheduling is performed based on the priority. This can ensure that an important task is processed in time, thereby improving a response speed and performance of the system and improving user experience.

Optionally, a main thread of a subprocess is determined from threads of the subprocess by reading a thread identifier.

In some embodiments, identifying the associated thread of the first thread includes: identifying a thread corresponding to a same task as the first thread from the threads of the second process as the associated thread of the first thread.

Specifically, the thread corresponding to the same task as the first thread is identified from the threads (namely, second threads) of the one or more subprocesses as the associated thread of the first thread, so that the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

In some embodiments, the first thread communicates with a first module, and the method further includes: determining a thread that communicates with the first module in the threads of the second process as the thread corresponding to the same task as the first thread.

Specifically, when the plurality of threads communicate with a same module (that is, the first module), the threads execute same code logic, and may execute a same task. Therefore, the threads may be associated, so that the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

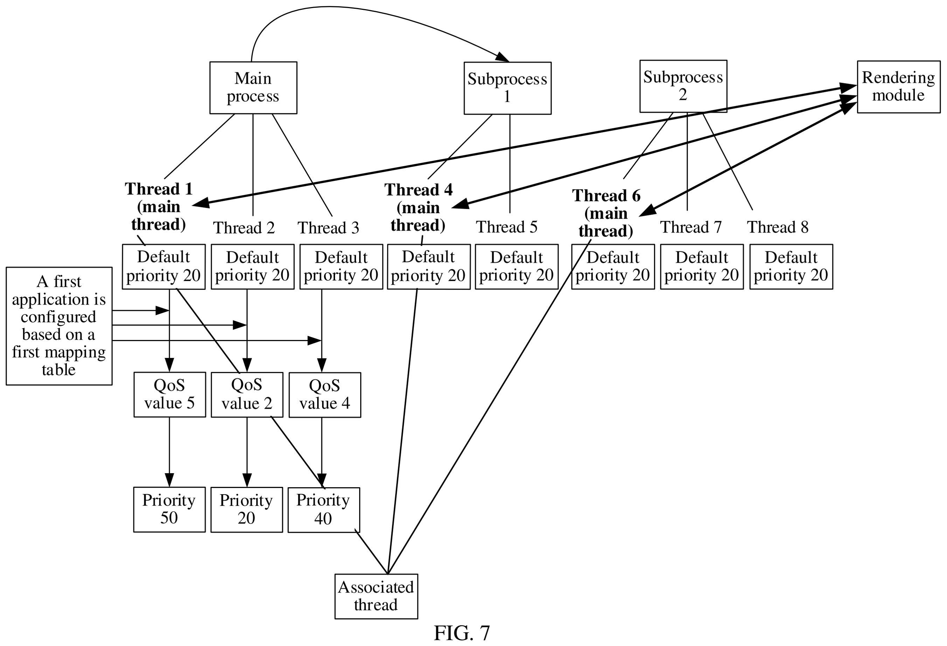

For example, FIG. 7 is another diagram of identifying an associated thread according to an embodiment of this application. When the first module is a rendering module run by the electronic device, a plurality of threads, such as a thread 1, a thread 4, and a thread 6, may interact with the rendering module in a preset time period, and the threads collaborate with each other to jointly complete a rendering task. The thread may interact with the rendering module through an interface provided by the rendering module.

Optionally, the rendering module may record thread access information in the preset time period, where the thread access information records information related to a thread that has accessed the rendering module in the preset time period, for example, a thread identifier. Further, threads that have accessed the rendering module in the preset time period, such as a thread 1, a thread 4, and a thread 6, may be determined based on the thread access information recorded by the rendering module in the preset time period. The threads execute same code logic, and may execute a same rendering task. Therefore, the threads may be associated, so that associated threads (the thread 4 and the thread 6) can follow the first thread (the thread 1) in priority adjustment, and thread scheduling is performed based on the priority. All threads corresponding to a same rendering task can be scheduled to a processor at a same or similar moment for running, so that it can be ensured that the rendering task is responded to more quickly, thereby improving a response speed and performance of the system and improving user experience.

In some embodiments, the first module is a rendering module run by the electronic device; or the first module is a window management module run by the electronic device; or the first module is a component management module run by the electronic device.

Specifically, the rendering module may be the rendering module described in FIG. 1b, and the window management module may be the window manager described in FIG. 1b. In this embodiment of this application, when the first thread accesses the rendering module, other threads interacting with the rendering module may be identified as the associated threads of the first thread, and execute a same or an identical rendering task. When the first thread accesses the window management module, other threads interacting with the window management module may be identified as the associated threads of the first thread, and execute a same or an identical window drawing task. When the first thread accesses the component management module, other threads interacting with the component management module may be identified as the associated threads of the first thread, and execute a same or an identical graphics task. Further, the associated thread can follow the first thread in priority adjustment, and thread scheduling is performed based on the priority. All threads corresponding to a same task can be scheduled to a processor at a same or similar moment for running, so that it can be ensured that the task can be responded to more quickly, thereby improving a response speed and performance of the system and improving user experience.

In some embodiments, when the first module is the window management module, determining the thread that communicates with the first module in the threads of the second process as the thread corresponding to the same task as the first thread includes: determining, from the threads of the second process as the thread corresponding to the same task as the first thread, a thread that communicates with the window management module and that executes a drawing task for a same window as the first thread.

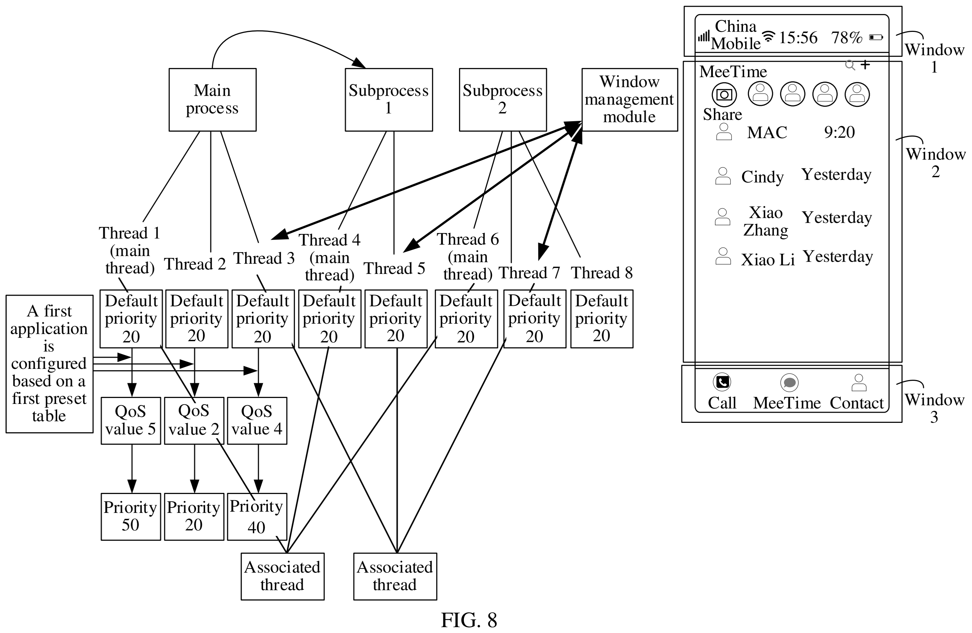

Specifically, a plurality of threads interacting with the window management module may draw a same window, or may draw different windows. For example, FIG. 8 is still another diagram of identifying an associated thread according to an embodiment of this application. In FIG. 8, it is assumed that a display of the electronic device displays a user interface 1, and the user interface 1 actually includes a plurality of windows, such as a window 1, a window 2, and a window 3. The plurality of windows may be drawn at the same time, or may be drawn in a similar time period. To more accurately identify the associated thread of the first thread, the thread that executes the drawing task for the same window as the first thread is determined as the thread corresponding to the same task as the first thread, that is, threads that draw the same window are associated. Assuming that a thread 3, a thread 5, and a thread 7 need to execute a drawing task of drawing the window 1, the thread 3, the thread 5, and the thread 7 may be associated. The thread 3 is used as the first thread, and the thread 5 and the thread 7 are used as the associated threads. Further, the associated thread can follow the first thread in priority adjustment, and thread scheduling is performed based on the priority. All threads corresponding to a same task can be scheduled to a processor at a same or similar moment for running, so that it can be ensured that the task is responded to more quickly, thereby improving a response speed and performance of the system and improving user experience.

Optionally, the window management module may record thread invocation information corresponding to each window. For example, thread invocation information corresponding to the drawing of the window 1 includes related information of all threads that need to be invoked for the drawing of the window 1, thread invocation information corresponding to the drawing of the window 2 includes related information of all threads that need to be invoked for the drawing of the window 2, and thread invocation information corresponding to the drawing of the window 3 includes related information of all threads that need to be invoked for the drawing of the window 3. Further, a plurality of threads that draw a same window may be determined based on thread invocation information.

Step S204: Set a priority of the associated thread based on the priority of the first thread.

Specifically, after the associated thread of the first thread is identified, the priority of the associated thread may be adjusted based on the priority of the first thread. The priority of the first thread is set according to a user requirement. Because the priority of the associated thread is determined by the priority of the first thread, the priority of the associated thread can also meet the user requirement. This avoids a case in which a priority of a thread of a subprocess cannot be appropriately configured according to a user requirement because an application cannot sense the thread of the subprocess, thereby improving a response speed and performance of the system and improving user experience.

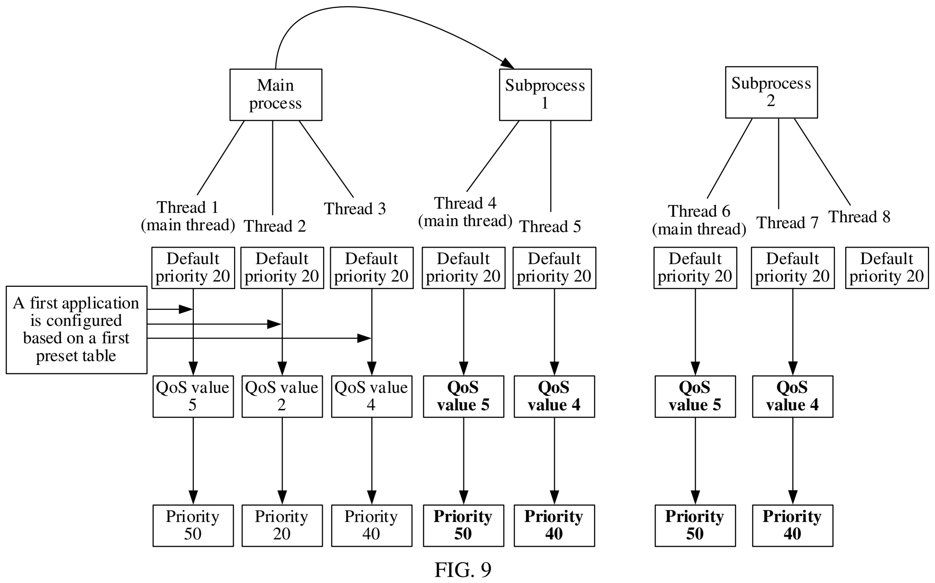

For example, FIG. 9 is a diagram of adjusting a priority of a thread of a subprocess according to an embodiment of this application. For example, after step S201 to step S203 are performed, it may be determined that associated threads of the thread 1 are the thread 4 and the thread 6, and associated threads of the thread 3 are the thread 5 and the thread 7. A QoS value of the thread 1 is 5, and QoS values of the thread 4 and the thread 6 may be set to 5, so that a priority of the thread 4 is updated to 50, and a priority of the thread 6 is updated to 50. A QoS value of the thread 3 is 4, and QoS values of the thread 5 and the thread 7 may be set to 4, so that a priority of the thread 5 is updated to 40, and a priority of the thread 7 is updated to 40.

In some embodiments, a first interface may be created for each thread of the second process, and a QoS value may be configured for the thread of the second process through the first interface. For example, based on a QoS value of the first thread, a QoS value of the associated thread may be configured through the first interface, so that the priority of the associated thread is updated. The first interface may be setThreadQos().

Step S205: Detect that a running status of the first application changes, and adjust the priority of the first thread and the priority of the associated thread.

Specifically, a priority adjustment trend of the associated thread is consistent with a priority adjustment trend of the first thread. That the priority adjustment trend of the associated thread is consistent with the priority adjustment trend of the first thread includes: If the priority of the first thread is increased, the priority of the associated thread is increased; or if the priority of the first thread is decreased, the priority of the associated thread is decreased; or if the QoS value of the first thread changes, the priority of the associated thread is correspondingly changed to a priority corresponding to a changed QoS value of the first thread.

In some embodiments, the method further includes: detecting that the running status of the first application changes, and modifying the QoS value of the first thread.

Specifically, when it is detected that the running status of the first application changes, that is, a user requirement changes, the first application may adjust the priority of the first thread by modifying the QoS value of the first thread, so that the priority of the thread of the first process is adjusted according to the user requirement, thereby improving user experience.

In some embodiments, detecting that the running status of the first application changes, and adjusting the priority of the first thread and the priority of the associated thread include: detecting that the running status of the first application changes, and adjusting the priority of the first thread and the priority of the associated thread based on a modified QoS value of the first thread and the first mapping table.

In this embodiment of this application, when it is detected that the running status of the first application changes, that is, a user requirement changes, the first application may modify the QoS value of the first thread according to the requirement. For example, if the user currently expects that the document opening function of the first application is responded to as quickly as possible, the QoS value of the first thread corresponding to the function may be modified to a larger value, so that the priority of the first thread and the priority of the associated thread can be adjusted based on the modified QoS value of the first thread and the first mapping table, that is, the associated thread follows the first thread in priority adjustment. This avoids a case in which a priority of a thread of a subprocess cannot be appropriately adjusted according to a user requirement because an application cannot sense the thread of the subprocess, thereby improving a response speed and performance of the system and improving user experience.

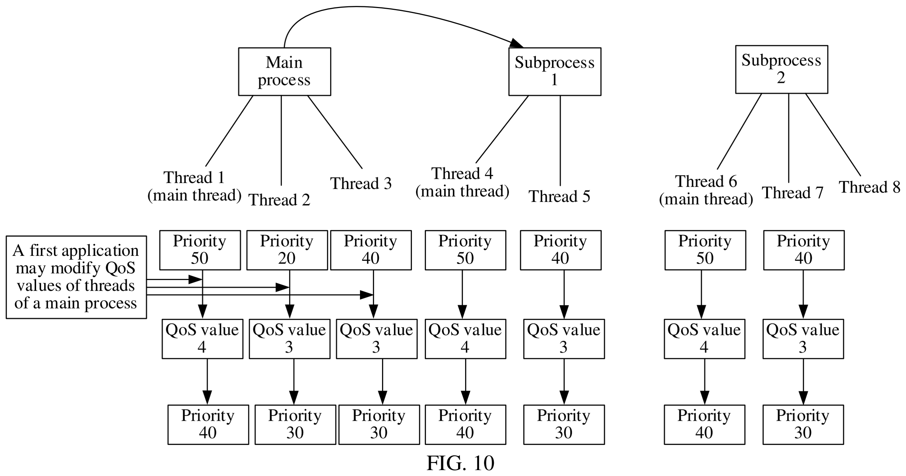

For example, FIG. 10 is a diagram of adjusting the priorities of the first thread and the associated thread according to an embodiment of this application. Assuming that the first application modifies the QoS value of the first thread of the main process, for example, modifies a QoS value of the thread 1 to 4, modifies a QoS value of the thread 2 to 3, and modifies a QoS value of the thread 3 to 3, a priority of the thread 1 is adjusted to 40, priorities of associated threads (the thread 4 and the thread 6) are also adjusted to 40, a priority of the thread 2 is adjusted to 30, a priority of the thread 3 is adjusted to 30, and priorities of associated threads (the thread 5 and the thread 7) are also adjusted to 30.

In some embodiments, a larger QoS value in the first mapping table indicates a higher priority of a corresponding thread; and when the change in the running status of the first application is that the first application switches from a foreground state to a background state or a frozen state, the QoS value of the first thread decreases, and the priority of the first thread and the priority of the associated thread decrease; or when the change in the running status of the first application is that the first application switches from the background state or the frozen state to the foreground state, the QoS value of the first thread increases, and the priority of the first thread and the priority of the associated thread increase.

Specifically, when the first application switches from the foreground state to the background state or the frozen state, the priority of the first thread and the priority of the associated thread may be decreased, to ensure that a current foreground application of the electronic device can respond more quickly; or when the first application switches from the background state or the frozen state to the foreground state, the priority of the first thread and the priority of the associated thread may be increased, to ensure that the first application can respond more quickly, thereby improving user experience.

In some embodiments, when the first application is in a start phase and a background phase, the priority of the associated thread is consistent with the priority of the first thread. For example, if the priority of the first thread is 50, the priority of the associated thread is also 50. When the first application runs in the foreground state, the priority of the first thread may be higher than the priority of the associated thread. For example, if the priority of the first thread is 50, the priority of the associated thread may be one level lower than the priority of the first thread, that is, is 40. Although the priority of the first thread is inconsistent with the priority of the associated thread, when the running status of the first application changes, the priority adjustment trend of the associated thread is consistent with the priority adjustment trend of the first thread. If the first thread is increased, the associated thread is also increased; or if the first thread is decreased, the associated thread is also decreased. This can ensure that the first thread can be scheduled to the processor for running in time.

Optionally, step S206: Determine aggregated load of the first thread and the associated thread, and adjust a main frequency of the processor based on the aggregated load.

Specifically, the electronic device may include the processor, and the main frequency of the processor is a running frequency of the processor, for example, 1000 MHz or 2000 MHz. A frequency adjustment period may be set for the processor. For example, if the adjustment period is 4 milliseconds, the processor may set the main frequency once every 4 milliseconds. After the thread is scheduled to the processor for running, the aggregated load may be calculated based on total running duration of the thread and the associated thread, so as to adjust the main frequency of the processor based on the calculated aggregated load, that is, adjust frequency by comprehensively considering running statuses of the first thread and the associated thread. This can ensure a thread running speed and can further reduce energy consumption, thereby improving user experience.

Optionally, running status information, for example, trace (trace) information in an Android system, of the first thread and the associated thread of the first thread is obtained by reading system information.

In some embodiments, the aggregated load of the first thread and the associated thread may be determined according to Formula 1. Formula 1 is as follows.

$$L1 = F * C1 \quad (\text{Formula 1})$$

L1 represents the aggregated load, F represents a current frequency of the processor, and C1 represents a first duty cycle. The first duty cycle is a proportion of total duration of the first thread and the associated thread in the frequency adjustment period of the processor. The main frequency of the processor is adjusted based on the aggregated load.

Optionally, the first duty cycle is calculated based on running statuses of the first thread and the associated thread in one frequency adjustment period; or the first duty cycle may be calculated based on running statuses of the first thread and the associated thread in a plurality of frequency adjustment periods.

In some embodiments, a thread whose QoS value is greater than a preset value is determined, and aggregated load of the thread whose QoS value is greater than the preset value is determined; and the main frequency of the processor is adjusted based on the aggregated load.

In some embodiments, adjusting the main frequency of the processor based on the aggregated load includes: determining whether the aggregated load is greater than a first threshold; and adjusting the main frequency of the processor based on the aggregated load if the aggregated load is greater than the first threshold.

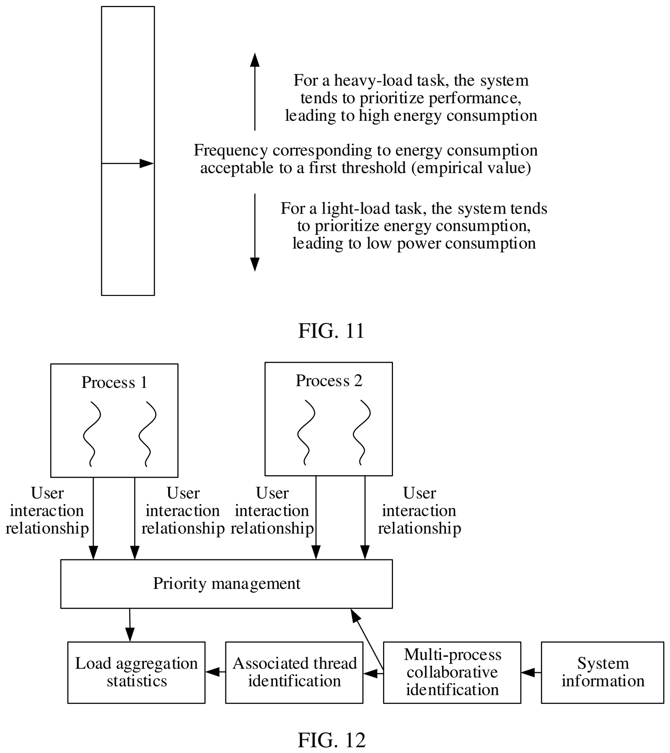

Specifically, FIG. 11 is a diagram of the first threshold according to this application. The first threshold may be a value preset by the electronic device, a value updated by the electronic device from a cloud, or an empirical value obtained by the electronic device through machine learning. The first threshold may indicate a frequency corresponding to energy consumption acceptable to the system. For example, the first threshold is 1200, 1250, 1300, 1350, 1400, or 1500. When the aggregated load is greater than the first threshold, it indicates that the first thread and the associated thread of the first thread execute a heavy-load task, and the heavy-load task is generally an important task. In this case, the system tends to ensure performance of the first thread and the associated thread, so as to adjust the main frequency of the processor based on the calculated aggregated load. This can ensure a thread running speed and can further reduce energy consumption, thereby improving user experience.

In some embodiments, adjusting the main frequency of the processor based on the aggregated load includes: increasing the main frequency of the processor when the aggregated load is greater than a second threshold; or decreasing or skipping adjusting the main frequency of the processor when the aggregated load is less than or equal to the second threshold.

Specifically, when the aggregated load is greater than the second threshold, it indicates that the processor currently runs the first thread and the associated thread most of the time. In this case, the main frequency of the processor may be increased, so that the processor can run the first thread and the associated thread more quickly. Alternatively, when the aggregated load is less than or equal to the second threshold, it indicates that the processor currently still has significant idle time after the processor runs the first thread and the associated thread. In this case, the main frequency of the processor may be decreased or may not be adjusted, so that energy consumption of the processor is reduced.

In some embodiments, the method further includes: determining first load of the first thread if the aggregated load is less than or equal to the first threshold, where the first load is a product of the current frequency of the processor and a second duty cycle, and the second duty cycle is a proportion of duration of the first thread in the frequency adjustment period of the processor; and adjusting the main frequency of the processor based on the first load.

Specifically, when the aggregated load is less than or equal to the first threshold, it indicates that the first thread and the associated thread of the first thread correspond to a light-load task, and the light-load task is generally a common task. In this case, the system tends to reduce energy consumption of the processor, so that the first load can be calculated based on running duration of the first thread, and the main frequency of the processor can be adjusted based on the calculated first load, thereby reducing energy consumption of the processor and improving user experience.

Optionally, the second duty cycle is calculated based on a running status of the first thread in one frequency adjustment period; or the second duty cycle may be calculated based on a running status of the first thread in a plurality of frequency adjustment periods.

For example, FIG. 12 is a diagram of a thread priority scheduling method according to an embodiment of this application. An application may actively mark a user interaction level of a thread, and deliver the user interaction level to a kernel by using a QoS management module. The kernel may dynamically adjust a priority of the thread based on a user interaction relationship of the thread and a foreground or background state of the application. For a multi-process collaborative application scenario, associated threads of a main process and a subprocess are identified, and identification is performed based on a thread creation relationship, a window state in which the thread is located, and interaction between a thread and a key module such as a rendering module. The associated threads of the main process and the subprocess are collaboratively adjusted. In start phases of the main process and the subprocess, a same policy is used for ensuring the priorities. In a running phase, a change of a priority of the subprocess is consistent with a change of the main process. However, in a foreground state, the priority of the subprocess may be lower than that of the main process. A user interaction relationship of a thread of the main process may be transferred to the associated thread of the sub-thread for collaboration, to improve a processor supply of the thread. Load aggregation statistics is performed on a thread with a high user interaction relationship. The kernel performs load aggregation on the delivered thread with the high user interaction relationship. The aggregated load participates in frequency calculation, and processor computing power is managed and controlled based on the aggregated load. If the aggregated load is less than a first threshold, frequency adjustment is normally performed to make a key thread run on a high-energy-efficient frequency. If the aggregated load is greater than the threshold, aggregated frequency adjustment is performed to make the key thread and an associated thread of the key thread run on a high frequency.

In conclusion, in an actual use scenario of the electronic device, dynamic supply scheduling needs to be performed for threads with different user interaction relationships. A thread with a high user interaction relationship is quickly supplied with high performance, and a thread with a low user interaction relationship is supplied with low power consumption. Priorities of associated threads in multi-process collaboration are collaboratively adjusted. In the start phases of the main process and the subprocess, the same policy is used for ensuring the priorities. In the running phase, the change of the priority of the subprocess is consistent with the change of the main process. However, in the foreground state, the priority of the subprocess may be lower than that of the main process. Load aggregation statistics is performed on a key thread with a high user interaction relationship, so that the frequency of the processor is accurately adjusted.

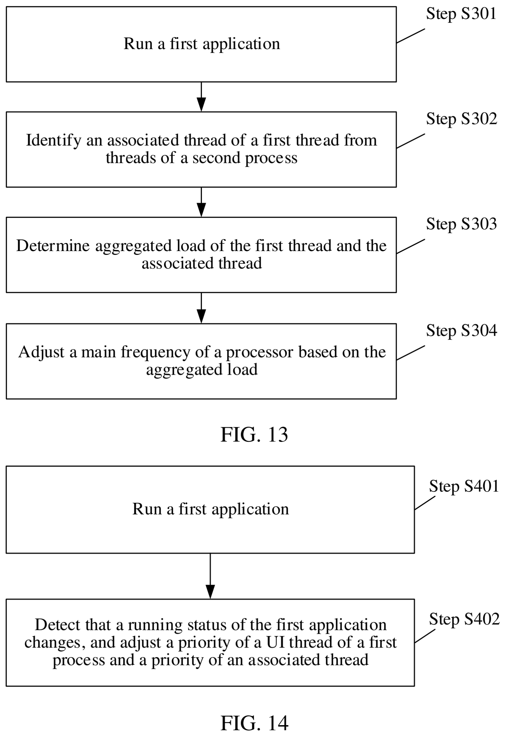

FIG. 13 is a schematic flowchart of a frequency adjustment method according to an embodiment of this application. The method is applied to an electronic device, and the electronic device includes a processor. The method includes the following steps.

Step S301: Run a first application.

Specifically, a first process of the first application includes a plurality of first threads.

Step S302: Identify an associated thread of the first thread from threads of a second process.

Specifically, the second process is a process, other than the first process, that is run by the electronic device and that provides a service for the first application.

Step S303: Determine aggregated load of the first thread and the associated thread.

Specifically, the aggregated load is a product of a current frequency of the processor and a first duty cycle, and the first duty cycle is a proportion of total duration of the first thread and the associated thread in a frequency adjustment period of the processor.

Step S304: Adjust a main frequency of the processor based on the aggregated load.

In some embodiments, adjusting the main frequency of the processor based on the aggregated load includes: determining whether the aggregated load is greater than a first threshold; and adjusting the main frequency of the processor based on the aggregated load if the aggregated load is greater than the first threshold.

In some embodiments, adjusting the main frequency of the processor based on the aggregated load includes: increasing the main frequency of the processor when the aggregated load is greater than a second threshold; or decreasing or skipping adjusting the main frequency of the processor when the aggregated load is less than or equal to the second threshold.

In some embodiments, the method further includes: determining first load of the first thread if the aggregated load is less than or equal to the first threshold, where the first load is a product of the current frequency of the processor and a second duty cycle, and the second duty cycle is a proportion of duration of the first thread in the frequency adjustment period of the processor; and adjusting the main frequency of the processor based on the first load.

In this embodiment of this application, after the thread is scheduled to the processor for running, the aggregated load may be calculated based on total running duration of the thread and the associated thread, so as to adjust the main frequency of the processor based on the calculated aggregated load, that is, adjust frequency by comprehensively considering running statuses of the first thread and the associated thread. This can ensure a thread running speed and can further reduce energy consumption, thereby improving user experience.

FIG. 14 is a schematic flowchart of a thread priority adjustment method according to an embodiment of this application. The method is applied to an electronic device. The method includes the following steps.

Step S401: Run a first application.

Specifically, an interface of the first application includes a first window corresponding to a first process and a second window corresponding to a second process, the second window is nested in the first window, the first process is a process of the first application, the second process is a process of the first application or a second application, and a UI thread of the second process is an associated thread of a UI thread of the first process.

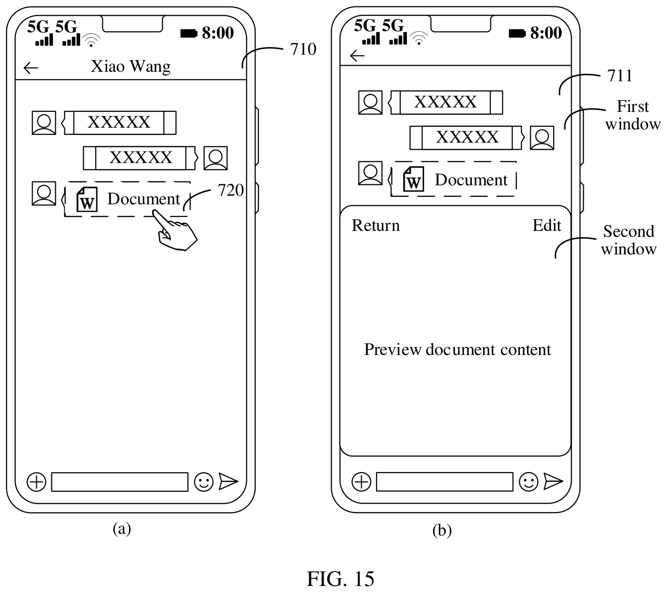

For example, FIG. 15 is a diagram of the interface of the first application according to an embodiment of this application. It is assumed that the first application is a chat application, the electronic device displays a user interface 710, the user interface 710 is a chat dialog interface, and a document 720 exists in a chat dialog box. The electronic device may receive and respond to a touch operation performed by a user on the document 720, open the document, and display a user interface 711. The user interface 711 may be a document display interface. At least two windows may exist on the interface. A first window is obtained by rendering a main process of the first application, and a second window is obtained by rendering another process (that is, a process started by the main process or a process started by a system) of the first application. Because the first window needs to be simultaneously rendered with the second window, a UI thread corresponding to the first window may be associated with a UI thread corresponding to the second window, that is, the UI thread of the second process is used as the associated thread of the UI thread of the first process, thereby facilitating subsequent thread priority adjustment.

Step S402: Detect that a running status of the first application changes, and adjust a priority of the UI thread of the first process and a priority of the associated thread.

Specifically, a priority adjustment trend of the associated thread is consistent with a priority adjustment trend of the UI thread of the first process.

In some embodiments, a component tree of the second process is mounted in a component tree of the first process.

In this embodiment of this application, the interface of the first application may include a plurality of windows, such as the first window and the second window. The second window is nested in the first window. The first window needs to be simultaneously rendered with the second window. Therefore, a UI thread corresponding to the first window may be associated with a UI thread corresponding to the second window, that is, the UI thread of the second process is used as the associated thread of the UI thread of the first process. Therefore, when it is detected that the running status of the first application changes, that is, when a user requirement changes, the UI thread of the second process follows the UI thread of the first process in priority adjustment. This avoids a case in which a priority of a thread of the second process cannot be appropriately adjusted according to a user requirement because an application cannot sense the thread of the second process, thereby improving a response speed and performance of a system and improving user experience.

An embodiment of this application provides a schematic flowchart of a thread priority adjustment method. The method is applied to an electronic device. The method includes: running a first application, where a first process of the first application includes a plurality of first threads; identifying an associated thread of the first thread from threads of a second process, where the first thread and the associated thread are used for jointly rendering an interface of the first application; and detecting that a running status of the first application changes, and adjusting a priority of the first thread and a priority of the associated thread, where a priority adjustment trend of the associated thread is consistent with a priority adjustment trend of the first thread.

In some embodiments, both the first thread and the associated thread are used for sending a rendering instruction to a rendering module.

In this scenario, the associated thread may be a main thread of the second process, a Compositor thread, or a CompositorTileW thread. The main thread may be used for measurement (Measure), layout (layout) to generate a hierarchical tree, and drawing (paint) to generate a drawing instruction. The Compositor thread may be used for dividing a layer into smaller image blocks and transfer the smaller image blocks to a raster thread for rasterization. The CompositorTileW thread may be used for picture decoding and tiled graphics processing unit (Graphics Processing Unit, GPU) instruction generation, and required preferential rendering of visible areas.

In this embodiment of this application, because threads for rendering the interface of the first application execute a similar task, threads that are of different processes and that render the interface of the first application may be associated. To be specific, a thread that jointly renders the interface of the first application with the first thread is identified from the threads of the second process as the associated thread. Therefore, when it is detected that the running status of the first application changes, that is, when a user requirement changes, the associated thread follows the first thread in priority adjustment. This avoids a case in which a priority of a thread of a subprocess cannot be appropriately adjusted according to a user requirement because an application cannot sense the thread of the subprocess, thereby improving a response speed and performance of a system and improving user experience.

This application provides an electronic device, including a storage and one or more processors. The storage is coupled to the one or more processors, the storage is configured to store computer program code, the computer program code includes computer instructions, and the one or more processors invoke the computer instructions, to enable the electronic device to perform any one of the foregoing thread priority adjustment methods, and perform any one of the foregoing frequency adjustment methods.

This application provides a computer-readable storage medium, including instructions. When the instructions are run on an electronic device, the electronic device is enabled to perform any one of the foregoing thread priority adjustment methods, and perform any one of the foregoing frequency adjustment methods.

This application provides a computer program product. When the computer program product runs on a computer, the computer is enabled to perform any one of the foregoing thread priority adjustment methods, and perform any one of the foregoing frequency adjustment methods.

This application provides a chip system. The chip system includes at least one processor, configured to implement any one of the foregoing thread priority adjustment methods, and perform any one of the foregoing frequency adjustment methods.

In the foregoing embodiments, descriptions of the embodiments have respective focuses. For a part that is not described in detail in an embodiment, refer to related descriptions in other embodiments.

It should be noted that, for brief description, the foregoing method embodiments are expressed as a series of actions. However, a person skilled in the art should appreciate that this application is not limited to the described order of the actions, because according to this application, some steps may be performed in other orders or performed simultaneously. In addition, a person skilled in the art should also appreciate that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiments are merely examples. For example, division of the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate components may or may not be physically separate, and components displayed as units may or may not be physical units, to be specific, may be located in one place, or may be distributed on a plurality of network units. A part or all of the units may be selected according to an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium, and includes several instructions for instructing a computer device (which may be a personal computer, a server, a network device, or the like, and may be specifically a processor in the computer device) to perform all or a part of steps of the methods in embodiments of this application. The foregoing storage medium includes any medium that can store program code, for example, a USB flash drive, a removable hard disk, a magnetic disk, an optical disc, a read-only memory (Read-Only Memory, ROM for short), or a random access memory (Random Access Memory, RAM for short).

In conclusion, the foregoing embodiments are merely used for describing the technical solutions of this application, but not for limiting the technical solutions of this application. Although this application is described in detail with reference to the foregoing embodiments, persons of ordinary skill in the art should understand that they may still make modifications to the technical solutions described in the foregoing embodiments or make equivalent replacements to a part of technical features of the technical solutions. However, the modifications or replacements shall not make the essence of corresponding technical solutions depart from the scope of the technical solutions of embodiments of this application.

**Claims**

1. A thread priority adjustment method, applied to an electronic device, wherein the method comprises:

   running a first application, wherein a first process of the first application comprises a plurality of first threads;
   identifying an associated thread of the first thread from threads of a second process, wherein the second process is a process, other than the first process and a resident process, that is run by the electronic device and that provides a service for the first application; and
   detecting that a running status of the first application changes, and adjusting a priority of the first thread and a priority of the associated thread, wherein a priority adjustment trend of the associated thread is consistent with a priority adjustment trend of the first thread.

2. The method according to claim 1, wherein when the second process is created by the first process, and the first thread is a main thread of the first process, identifying the associated thread of the first thread comprises:
   identifying a main thread of the second process as the associated thread of the first thread.

3. The method according to claim 1, wherein identifying the associated thread of the first thread comprises:
   identifying a thread corresponding to a same task as the first thread from the threads of the second process as the associated thread of the first thread.

4. The method according to claim 3, wherein the first thread communicates with a first module, and the method further comprises:
   determining a thread that communicates with the first module in the threads of the second process as the thread corresponding to the same task as the first thread.

5. The method according to claim 4, wherein the first module is a rendering module run by the electronic device; or the first module is a window management module run by the electronic device; or the first module is a component management module run by the electronic device.

6. The method according to claim 5, wherein when the first module is the window management module, determining the thread that communicates with the first module in the threads of the second process as the thread corresponding to the same task as the first thread comprises:
   determining, from the threads of the second process as the thread corresponding to the same task as the first thread, a thread that communicates with the window management module and that executes a drawing task for a same window as the first thread.

7. The method according to any one of claims 1 to 6, wherein before identifying the associated thread of the first thread, the method further comprises:
   setting the priority of the first thread based on a first mapping table and a user interaction relationship value of the first thread, wherein the first mapping table comprises a mapping relationship between a user interaction relationship value and a priority.

8. The method according to claim 7, wherein after identifying the associated thread of the first thread, the method further comprises:
setting the priority of the associated thread based on the priority of the first thread.

9. The method according to any one of claims 1 to 8, wherein the method further comprises:
detecting that the running status of the first application changes, and modifying the user interaction relationship value of the first thread.

10. The method according to claim 9, wherein detecting that the running status of the first application changes, and adjusting the priority of the first thread and the priority of the associated thread comprise:
detecting that the running status of the first application changes, and adjusting the priority of the first thread and the priority of the associated thread based on a modified user interaction relationship value of the first thread and the first mapping table.

11. The method according to claim 9 or 10, wherein a larger user interaction relationship value in the first mapping table indicates a higher priority of a corresponding thread; and when the change in the running status of the first application is that the first application switches from a foreground state to a background state or a frozen state, the user interaction relationship value of the first thread decreases, and the priority of the first thread and the priority of the associated thread decrease; or
when the change in the running status of the first application is that the first application switches from the background state or the frozen state to the foreground state, the user interaction relationship value of the first thread increases, and the priority of the first thread and the priority of the associated thread increase.

12. The method according to any one of claims 1 to 11, wherein the electronic device comprises a processor, and the method further comprises:

determining aggregated load of the first thread and the associated thread, wherein the aggregated load is a product of a current frequency of the processor and a first duty cycle, and the first duty cycle is a proportion of total duration of the first thread and the associated thread in a frequency adjustment period of the processor; and adjusting a main frequency of the processor based on the aggregated load.

13. The method according to claim 12, wherein adjusting the main frequency of the processor based on the aggregated load comprises:

determining whether the aggregated load is greater than a first threshold; and

increasing the main frequency of the processor when the aggregated load is greater than the first threshold and greater than a second threshold; or
decreasing or skipping adjusting the main frequency of the processor when the aggregated load is greater than the first threshold and less than or equal to the second threshold.

14. The method according to claim 13, wherein the method further comprises:

determining first load of the first thread when the aggregated load is less than or equal to the first threshold, wherein the first load is a product of the current frequency of the processor and a second duty cycle, and the second duty cycle is a proportion of duration of the first thread in the frequency adjustment period of the processor; and
adjusting the main frequency of the processor based on the first load.

15. A frequency adjustment method, applied to an electronic device, wherein the electronic device comprises a processor, and the method comprises:

running a first application, wherein a first process of the first application comprises a plurality of first threads;
identifying an associated thread of the first thread from threads of a second process, wherein the second process is a process, other than the first process and a resident process, that is run by the electronic device and that provides a service for the first application;
determining aggregated load of the first thread and the associated thread, wherein the aggregated load is a product of a current frequency of the processor and a first duty cycle, and the first duty cycle is a proportion of total duration of the first thread and the associated thread in a frequency adjustment period of the processor; and
adjusting a main frequency of the processor based on the aggregated load.

16. A thread priority adjustment method, applied to an electronic device, wherein the method comprises:

running a first application, wherein an interface of the first application comprises a first window corresponding to a first process and a second window corresponding to a second process, the second window is nested in the first window, the first process is a process of the first application, the second process is a process of the first application or a second application, and a UI thread of the second process is an associated thread of a UI thread of the first process; and detecting that a running status of the first application changes, and adjusting a priority of the UI thread of the first process and a priority of the associated thread, wherein a priority adjustment trend of the associated thread is consistent with a priority adjustment trend of the UI thread of the first process.

17. The method according to claim 16, wherein a component tree of the second process is mounted in a component tree of the first process.

18. A thread priority adjustment method, applied to an electronic device, wherein the method comprises:

   running a first application, wherein a first process of the first application comprises a plurality of first threads;
   identifying an associated thread of the first thread from threads of a second process, wherein the first thread and the associated thread are used for jointly rendering an interface of the first application; and
   detecting that a running status of the first application changes, and adjusting a priority of the first thread and a priority of the associated thread, wherein a priority adjustment trend of the associated thread is consistent with a priority adjustment trend of the first thread.

19. The method according to claim 18, wherein both the first thread and the associated thread are used for sending a rendering instruction to a rendering module.

20. An electronic device, comprising a storage and one or more processors, wherein the storage is coupled to the one or more processors, the storage is configured to store computer program code, the computer program code comprises computer instructions, and the one or more processors invoke the computer instructions, to enable the electronic device to perform the method according to any one of claims 1 to 14, perform the method according to claim 15, perform the method according to claim 16 or 17, or perform the method according to claim 18 or 19.

21. A chip system, wherein the chip system comprises at least one processor and storage, and an interface circuit, the storage, the interface circuit, and the at least one processor are interconnected via a circuit, and the at least one storage stores instructions; and when the instructions are executed by the processor, the method according to any one of claims 1 to 14 can be implemented, or the method according to claim 15 can be implemented, or the method according to claim 16 or 17 is performed, or the method according to claim 18 or 19 is performed.

22. A computer-readable storage medium, comprising instructions, wherein when the instructions are run on an electronic device, the electronic device is enabled to perform the method according to any one of claims 1 to 14, perform the method according to claim 15, perform the method according to claim 16 or 17, or perform the method according to claim 18 or 19.

Electronic device 100

Antenna 1                       Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headphone jack [170D]

Audio module [170]

Displays 1 to N [194]

Camera module [193]

Indicator [192]

Motor [191]

Button [190]

Internal storage [121]

SIM card interfaces 1 to N [195]

Interface [120] for external memory

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Proximity light sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1a

**Application layer**

| APP 1 | Gallery | Settings | Call | Maps | ... |

| Navigation | WLAN | Bluetooth | Music | Video | Messages |

**Framework layer**

| Window manager | Content provider | View system | ... |

| Phone manager | Resource manager | Notification manager |

**System service layer**

| Rendering module | ⟷ | System service | | Runtime |

Multi-process collaborative identification

...

**QoS management module**

| User interaction relationship marking | Multi-process collaborative identification |

**Kernel layer**

| Priority management module | Associated thread identification module | Load aggregation statistics module | Frequency adjustment module | ... |

FIG. 1b

Step S201
Run a first application

Step S202
Set, based on a first mapping table and a user interaction relationship value of a first function that is provided for the first application, a priority of a first thread corresponding to the first function

Step S203
Identify an associated thread of the first thread from threads of a second process

Step S204
Set a priority of the associated thread based on the priority of the first thread

Step S205
Detect that a running status of the first application changes, and adjust the priority of the first thread and the priority of the associated thread

Step S206
Determine aggregated load of the first thread and the associated thread, and adjust a main frequency of a processor based on the aggregated load

FIG. 2

APP

UI Thread | Page loading thread | Document opening thread | Download thread | Backup thread

| User interaction relationship | User interaction task | As quickly as possible | Progress-visible | No immediate response required | User invisible |

User interaction relationship QoS value   Large ← — — — — — — — — — — — Small

## FIG. 3

| User interaction relationship | Scenario | Typical task | QoS value | Priority value |
|---|---|---|---|---|
| user interactive | User interaction task | UI or rendering | 5 | 50 |
| deadline request | Key task of "as quickly as possible" | Page loading | 4 | 40 |
| user initiated | User interaction task | User-triggered and progress-visible | 3 | 30 |
| default | Default level | Default | 2 | 20 |
| utility | Task that does not require immediate response | Data download or import | 1 | 10 |
| background | User-invisible task | Data synchronization or backup | 0 | 1 |

## FIG. 4

APP 1

Main process

Thread 1 (main thread)    Thread 2    Thread 3

| Default priority 20 | Default priority 20 | Default priority 20 |

OS

Subprocess 1

Thread 4 (main thread)    Thread 5

| Default priority 20 | Default priority 20 |

Subprocess 2

Thread 6 (main thread)    Thread 7    Thread 8

| Default priority 20 | Default priority 20 | Default priority 20 |

APP 1

Main process

Thread 1 (main thread)    Thread 2    Thread 3

A first application is configured based on a first mapping table

| Default priority 20 | Default priority 20 | Default priority 20 |

| QoS value 5 | QoS value 2 | QoS value 4 |

| Priority 50 | Priority 20 | Priority 40 |

OS

Subprocess 1

Thread 4 (main thread)    Thread 5

| Default priority 20 | Default priority 20 |

Subprocess 2

Thread 6 (main thread)    Thread 7    Thread 8

| Default priority 20 | Default priority 20 | Default priority 20 |

FIG. 5

Subprocess 2

Thread 6 (main thread) — Default priority 20

Thread 7 — Default priority 20

Thread 8 — Default priority 20

Subprocess 1

Thread 4 (main thread) — Default priority 20

Thread 5 — Default priority 20

Main process

Thread 1 (main thread) — Default priority 20

Thread 2 — Default priority 20

Thread 3 — Default priority 20

QoS value 5 → Priority 50

QoS value 2 → Priority 20

QoS value 4 → Priority 40

A first application is configured based on a first mapping table

Associated thread

FIG. 6

EP 4 745 774 A1

Main process

Subprocess 1

Subprocess 2

Rendering module

**Thread 1 (main thread)**

Thread 2

Thread 3

**Thread 4 (main thread)**

Thread 5

**Thread 6 (main thread)**

Thread 7

Thread 8

Default priority 20

Default priority 20

Default priority 20

Default priority 20

Default priority 20

Default priority 20

Default priority 20

Default priority 20

A first application is configured based on a first mapping table

QoS value 5

QoS value 2

QoS value 4

Priority 50

Priority 20

Priority 40

Associated thread

FIG. 7

China Mobile 15:56 78%

Window 1

MeeTime

Share

MAC 9:20

Cindy Yesterday

Xiao Zhang Yesterday

Xiao Li Yesterday

Window 2

Call MeeTime Contact

Window 3

Window management module

Subprocess 2

Subprocess 1

Main process

Thread 1 (main thread)
Thread 2
Thread 3
Thread 4 (main thread)
Thread 5
Thread 6 (main thread)
Thread 7
Thread 8

Default priority 20

A first application is configured based on a first preset table

QoS value 5
QoS value 2
QoS value 4

Priority 50
Priority 20
Priority 40

Associated thread

Associated thread

FIG. 8

FIG. 9

Main process

Subprocess 1

Subprocess 2

Thread 1 (main thread)

Thread 2

Thread 3

Thread 4 (main thread)

Thread 5

Thread 6 (main thread)

Thread 7

Thread 8

A first application may modify QoS values of threads of a main process

| Priority 50 | Priority 20 | Priority 40 | Priority 50 | Priority 40 | | Priority 50 | Priority 40 |

| QoS value 4 | QoS value 3 | QoS value 3 | QoS value 4 | QoS value 3 | | QoS value 4 | QoS value 3 |

| Priority 40 | Priority 30 | Priority 30 | Priority 40 | Priority 30 | | Priority 40 | Priority 30 |

FIG. 10

For a heavy-load task, the system tends to prioritize performance, leading to high energy consumption

Frequency corresponding to energy consumption acceptable to a first threshold (empirical value)

For a light-load task, the system tends to prioritize energy consumption, leading to low power consumption

FIG. 11

Process 1

Process 2

User interaction relationship

User interaction relationship

User interaction relationship

User interaction relationship

Priority management

Load aggregation statistics

Associated thread identification

Multi-process collaborative identification

System information

FIG. 12

Run a first application — Step S301

↓

Identify an associated thread of a first thread from threads of a second process — Step S302

↓

Determine aggregated load of the first thread and the associated thread — Step S303

↓

Adjust a main frequency of a processor based on the aggregated load — Step S304

FIG. 13

Run a first application — Step S401

↓

Detect that a running status of the first application changes, and adjust a priority of a UI thread of a first process and a priority of an associated thread — Step S402

FIG. 14

FIG. 15

## INTERNATIONAL SEARCH REPORT

| International application No. |
| --- |
| **PCT/CN2025/094412** |

### A. CLASSIFICATION OF SUBJECT MATTER

G06F 9/50(2006.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, WOTXT, VEN, EPTXT, USTXT, IEEE, CNKI: 线程优先级, 关联线程, 主线, 任务相同, 窗口, 用户交互线程, 渲染, 优先级调整, 优先级一致, 聚合负载, 主频, thread priority, associat+ thread, mainline, binder, windows, UI, render +, consistent priority, aggregated load, main frequency

### C. DOCUMENTS CONSIDERED TO BE RELEVANT

| Category* | Citation of document, with indication, where appropriate, of the relevant passages | Relevant to claim No. |
| --- | --- | --- |
| X | US 2012005457 A1 (INTERNATIONAL BUSINESS MACHINES CORP.) 05 January 2012 (2012-01-05) description, paragraphs 7-10 and 32-35 | 1-3, 20-22 |
| A | CN 114461360 A (BEIJING XIAOMI MOBILE SOFTWARE CO., LTD.) 10 May 2022 (2022-05-10) entire document | 1-22 |
| A | CN 117950847 A (HONOR DEVICE CO., LTD.) 30 April 2024 (2024-04-30) entire document | 1-22 |
| A | CN 114461353 A (ZTE CORP.) 10 May 2022 (2022-05-10) entire document | 1-22 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 August 2025** | **14 August 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | International application No. | |
|---|---|---|---|---|---|
| Information on patent family members | | | | **PCT/CN2025/094412** | |

| Patent document cited in search report | | | Publication date (day/month/year) | Patent family member(s) | | | Publication date (day/month/year) |
|---|---|---|---|---|---|---|---|
| US | 2012005457 | A1 | 05 January 2012 | None | | | |
| CN | 114461360 | A | 10 May 2022 | None | | | |
| CN | 117950847 | A | 30 April 2024 | None | | | |
| CN | 114461353 | A | 10 May 2022 | WO | 2022095862 | A1 | 12 May 2022 |
| | | | | US | 2023409391 | A1 | 21 December 2023 |
| | | | | EP | 4242842 | A1 | 13 September 2023 |

Form PCT/ISA/210 (patent family annex) (July 2022)

**REFERENCES CITED IN THE DESCRIPTION**

**Patent documents cited in the description**

- CN 202410700693